# EUROPÄISCHE PATENTSCHRIFT

(11) **EP 1 825 665 B1**
(45) Veröffentlichungstag und Bekanntmachung des Hinweises auf die Patenterteilung: **08.04.2020**
(21) Anmeldenummer: 05825503.5
(22) Anmeldetag: 26.11.2005
(51) Int. Cl.: H04M 19/04, H04M 1/725

(54) **MOBILES ENDGERÄT ZUR NUTZUNG IN TELEKOMMUNIKATIONSNETZEN**
MOBILE TERMINAL FOR USE IN TELECOMMUNICATIONS NETWORKS
TERMINAL MOBILE DESTINÉ À ÊTRE UTILISÉ DANS DES RÉSEAUX DE TÉLÉCOMMUNICATIONS

(30) Priorität: 16.12.2004 DE 102004061169; 28.12.2004 DE 102004063699
(43) Veröffentlichungstag der Anmeldung: 29.08.2007
(73) Patentinhaber: Vodafone Holding GmbH, 40213 Düsseldorf (DE)
(72) Erfinder: POINTON, Don, 40883 Ratingen (DE)
(74) Vertreter: Weisbrodt, Bernd
(86) Internationale Anmeldenummer: PCT/EP2005/012655
(87) Internationale Veröffentlichungsnummer: WO 2006/063671

(56) Entgegenhaltungen:
- EP-A- 1 298 893
- WO-A-2004/082248
- DE-A1- 10 231 570
- GB-A- 2 358 108
- US-A1- 2004 127 198
- US-A1- 2004 214 594

## Beschreibung

Die vorliegende Erfindung betrifft ein mobiles Endgerät zur Nutzung in Telekommunikationsnetzen, insbesondere in Mobilfunknetzen, mit wenigstens einem Mittel zur zumindest optischen und/oder akustischen Wiedergabe von Informationen repräsentierenden Signalen, wobei wenigstens einer Information wenigstens ein die Information repräsentierendes Signal mit festen und/oder einstellbaren Signalparametern zuordbar ist.

Derartige mobile Endgeräte sind im Stand der Technik in zahlreichen Ausgestaltungen, insbesondere als Mobilfunktelefon, bekannt. In der Regel werden dabei eingehende Anrufe und/oder eingehende Mitteilungen eines Nachrichtendienstes eines Telekommunikations-netzes, beispielsweise sogenannte SMS und/oder MMS insbesondere bei Mobilfunknetzen, als Kommunikationsinformation akustisch durch Klingeltöne bzw. optisch als Logo als ein die Kommunikations-information repräsentierendes Signal seitens des mobilen Endgerätes wiedergegeben. Auch sind entsprechende Informationen repräsentierende Signale beispielsweise als Erinnerungsfunktion für Termine und/oder als Wecker oder dergleichen nutzbar. Dabei sind beispielsweise die Lautstärke, die Anzahl an Signalwiederholungen und dergleichen Signalparameter von Informationen repräsentierenden Signalen seitens des mobilen Endgerätes üblicherweise individuell einstellbar. Ferner ist es möglich, die Informationen repräsentierenden Signale hinsichtlich bestimmter Kommunikationspartner individuell einzustellen, so dass beispielsweise schon anhand des Klingeltons als Anrufsignal ein bestimmter Kommunikationspartner für den Nutzer des mobilen Endgerätes erkennbar ist. Eine solche Erkennung erfolgt seitens des mobilen Endgerätes üblicherweise anhand der sogenannten Rufnummeridentifikation, wobei die Rufnummer des jeweiligen Kommunikationspartners mit über das Telekommunikationsnetz übertragen wird, sofern der jeweilige Kommunikationspartner diese Funktionalität aktiviert hat.

Im täglichen Gebrauch sind zahlreiche Situationen gegeben, in denen die Wiedergabe von Informationen repräsentierenden Signalen seitens des mobilen Endgerätes zwar störend ist bzw. empfunden wird, insbesondere in Besprechungen, Vortragsveranstaltungen oder dergleichen Situationen, allerdings ein Abschalten des mobilen Endgerätes aus Gründen eines wie auch immer gearteten Erreichbarkeitserfordernisses des Nutzers des mobilen Endgerätes nicht möglich bzw. gewünscht ist. In der Regel ist bei mobilen Endgeräten zu diesem Zwecke die Möglichkeit gegeben, die Zuordnung und Wiedergabe von Informationen, insbesondere Kommunikationsinformationen, repräsentierenden Signalen zu modifizieren bzw. zu unterdrücken, beispielsweise im Rahmen einer sogenannten "Stummschaltung", in der die akustische Wiedergabe von Signalen seitens des mobilen Endgerätes abgeschaltet wird.

Nachteilig ist dabei, dass Nutzer eines mobilen Endgerätes ein entsprechendes Zuordnen und Modifizieren bzw. Unterdrücken der Wiedergabe von Informationen, insbesondere Kommunikationsinformationen, repräsentierenden Signalen des mobilen Endgerätes in den entsprechenden Situationen häufig vergessen. Ferner sind für ein entsprechendes Modifizieren bzw. Unterdrücken der Wiedergabe von Informationen repräsentierenden Signalen des mobilen Endgerätes umfangreiche und aufwendige Tasteneingaben seitens des mobilen Endgerätes erforderlich, die insbesondere für ungeübte Nutzer von mobilen Endgeräten eine entsprechende Bedienung erschweren. Beispiele aus dem Stand der Technik sind aus den Dokumenten US2004127198, WO2004082248, GB 2358108 bekannt.

Der Erfindung liegt in Anbetracht dieses Standes der Technik die **Aufgabe** zugrunde, die Zuordnung von Informationen, insbesondere Kommunikationsinformationen, repräsentierenden Signalen unter Meidung der beschriebenen Nachteile zu vereinfachen.

Diese Aufgabe wird erfindungsgemäß durch ein mobiles Endgerät mit den Merkmalen des Anspruches 1 gelöst.

Der Erfindung liegt die Erkenntnis zugrunde, dass die Zuordnung von Informationen repräsentierenden Signalen vereinfachbar ist, wenn das mobile Endgerät den von dem Nutzer des mobilen Endgerätes hinsichtlich der Signalzuordnung gewünschten Betriebszustand selbst, vorzugsweise anhand bzw. aus der Bewegung des mobilen Endgerätes im Raum, erkennt.

Durch die erfindungsgemäße Signalzuordnung in Abhängigkeit der räumlichen Bewegung des mobilen Endgerätes können vorteilhafterweise ansonsten erforderliche umfangreiche und/oder aufwendige Tasteneingaben seitens des mobilen Endgerätes entfallen.

Die Information ist vorteilhafterweise eine Kommunikationsinformation, insbesondere umfassend seitens des mobilen Endgerätes eingehende und/oder abgehende Anrufe, eingehende und/oder abgehende Nachrichten eines Nachrichtendienstes eines Telekommunikationsnetzes, wie beispielsweise sogenannte SMS und/oder MMS insbesondere bei Mobilfunknetzen, oder dergleichen Kommunikationsinformationen.

Vorteilhafterweise ist die für die erfindungsgemäße Signalzuordnung vorgesehene räumliche Bewegung seitens des mobilen Endgerätes einstellbar. Dazu kann beispielsweise seitens eines Menüs des mobilen Endgerätes wenigstens eine entsprechende räumliche Bewegung des mobilen Endgerätes zur Auswahl angeboten und vom Nutzer des mobilen Endgerätes ausgewählt werden. In einer weiteren vorteilhaften Ausgestaltung der Erfindung ist die räumliche Bewegung individuell vorgebbar. Dadurch kann der Nutzer eines erfindungsgemäßen mobilen Endgerätes die für eine Signalzuordnung dienende räumliche Bewegung vorteilhafterweise selbst bestimmen und das mobile Endgerät entsprechend programmieren, vorteilhafterweise durch Ausführen der gewünschten räumlichen Bewegung zur bzw. im Rahmen der entsprechenden Programmierung des mobilen Endgerätes.

Eine weitere Ausgestaltung der Erfindung sieht vor, dass die Zuordnung des Signals zu der Information in Abhängigkeit von der relativen Lage des mobilen Endgerätes zum Untergrund erfolgt. So kann beispielsweise seitens des mobilen Endgerätes erkannt werden, ob dieses in einer bestimmten Lage auf einem Tisch oder in einer Tasche liegt und eine entsprechend von dem Nutzer gewünschte Signalzuordnung, die vorher von dem Nutzer ausgewählt, eingestellt oder vorgegeben wurde, erfolgen bzw. vorgenommen werden.

In einer besonders vorteilhaften Ausgestaltung der Erfindung erfolgt die Signalzuordnung in Abhängigkeit von wenigstens einer vorbestimmbaren Änderung der räumlichen Bewegung des mobilen Endgerätes und/oder der relativen Lage des mobilen Endgerätes zum Untergrund. So sind erfindungsgemäß vorteilhafterweise bestimmte Muster von räumlichen Bewegungen und/oder Lagepositionen des mobilen Endgerätes zur Signalzuordnung als Zuordnung vorgebbar bzw. programmierbar. Vorteilhafterweise erfolgt die vorbestimmbare Änderung durch ein aufeinanderfolgendes Einnehmen von wenigstens zwei räumlichen Bewegungen des mobilen Endgerätes und/oder von wenigstens zwei relativen Lagen des mobilen Endgerätes zum Untergrund. So kann zur Deaktivierung der akustischen Wiedergabe von Informationen repräsentierenden Signalen beispielsweise ein Wechsel von einer flach auf der Seite der Anzeigeeinrichtung (Display) des mobilen Endgerätes liegenden Position des mobilen Endgerätes in eine senkrecht stehende Position des mobilen Endgerätes mit der Antenne des mobilen Endgerätes nach oben weisend genutzt werden.

In einer weiteren Ausgestaltung der Erfindung unterliegt das aufeinanderfolgende Einnehmen zeitlichen Vorgaben, die vorzugsweise einstellbar und/oder individuell vorgebbar sind. Durch die erfindungsgemäße Nutzung bzw. Berücksichtigung von zeitlichen Vorgaben lassen sich vorteilhafterweise unbeabsichtigt ausgeführte räumliche Bewegungen des mobilen Endgerätes und/oder eingenommene relative Lagen des mobilen Endgerätes zum Untergrund, wie sie beispielsweise beim Tragen des mobilen Endgerätes in einer Tasche oder dergleichen Situationen vorkommen können, definiert unterdrücken bzw. ausschließen, indem beispielsweise deren zeitliche Einnehmungsdauer und/oder -folge für die Signalzuordnung sich von diesen zufälligen Einnehmungsdauern und/oder -folgen unterscheiden. Vorteilhafterweise sind einzunehmende Winkellagen des mobilen Endgerätes für die Signalzuordnung im Rahmen einer räumlichen Bewegung und/oder einer Lage zum Untergrund definierbar. In einer weiteren Ausgestaltung der Erfindung ist die Sensitivität, mit der räumliche Bewegungen für eine Signalzuordnung erfassbar, beispielsweise anhand der Geschwindigkeit oder der Beschleunigung der räumlichen Bewegung. So können unbeabsichtigte räumliche Bewegungen, beispielsweise durch versehentliche Stöße oder dergleichen unbeabsichtigte Bewegungen, für die Signalzuordnung ignoriert bzw. quasi ausgefiltert werden.

In einer besonders vorteilhaften Ausgestaltung der Erfindung ist die erfindungsgemäße Signalzuordnung durch Erkennung unbeabsichtigt ausgeführter räumlicher Bewegungen des mobilen Endgerätes und/oder eingenommener relative Lagen des mobilen Endgerätes zum Untergrund, wie sie beispielsweise beim Tragen des mobilen Endgerätes in einer Tasche oder dergleichen Situationen vorkommen können, rückgängigmachbar, wobei der Zustand der vorherigen Signalzuordnung oder ein anderer vorgebbarer Signalzuordnungszustand eingenommen wird. So muss der Nutzer eines erfindungsgemäßen mobilen Endgerätes nach einer Besprechung oder dergleichen Situation, in der das mobile Endgerät beispielsweise in Stummschaltung versetzt wurde, diese Signalzuordnung vorteilhafterweise nicht wieder selbst ändern.

Eine weitere Ausgestaltung der Erfindung ist gekennzeichnet durch ein wenigstens einmal erfolgendes Verschwenken des mobilen Endgerätes um wenigstens eine Koordinatenachse des mobilen Endgerätes als räumliche Bewegung. Eine weitere erfindungsgemäße Ausgestaltung ist gekennzeichnet ein Hin- und Herschwenken des mobilen Endgerätes, vorzugsweise nach Art eines Schüttelns des mobilen Endgerätes, als räumliche Bewegung.

Vorteilhafterweise erfolgt mit der Signalzuordnung eine Einstellung von Signalparametern des Signals, vorzugsweise hinsichtlich Lautstärke, Wiederholrate und dergleichen Signalparameter.

Das mobile Endgerät weist vorteilhafterweise wenigstens ein Mittel zur Erfassung der räumlichen Bewegung des mobilen Endgerätes und/oder wenigstens ein Mittel zur Erfassung der relativen Lage des mobilen Endgerätes zum Untergrund auf. Die Mittel umfassen dabei vorteilhafterweise ein Sensorikelement, beispielsweise einen Bewegungsmelder oder dergleichen. In einer weiteren vorteilhaften Ausgestaltung der Erfindung weist das mobile Endgerät wenigstens ein Mittel zur Erfassung einer Änderung der räumlichen Bewegung des mobilen Endgerätes und/oder der relativen Lage des mobilen Endgerätes zum Untergrund auf, vorzugsweise umfassend wenigsten einen Vergleicher oder dergleichen.

In einer weiteren besonders vorteilhaften Ausgestaltung der Erfindung umfasst das Mittel zur Erfassung der räumlichen Bewegung des mobilen Endgerätes und/oder das Mittel zur Erfassung der relativen Lage des mobilen Endgerätes zum Untergrund ein eine Lokalisierung der Position des mobilen Endgerätes erfassendes Mittel, vorzugsweise einen sogenannten GPS-Empfänger (GPS: Global Positioning System) oder dergleichen Positionslokalisierungsmittel. So ist die Position eines Mobilfunktelefons beispielsweise auch anhand der jeweiligen Funkzelle eines Mobilfunknetzes, in der sich das Mobilfunktelefon befindet und der Signalstärke des Kommunikationssignals zwischen dem Mobilfunktelefon und der Funkzelle ermittelbar. Vorteilhafterweise kann so auch aufgrund einer Erfassung der Bewegung eines mobilen Endgerätes in Kombination mit einer entsprechenden Positionslokalisierung seitens des mobilen Endgerätes anzeigen lassen, was ein Nutzer des mobilen Endgerätes gerade in seiner geografische Umgebung sieht, beispielsweise Gebäude oder dergleichen. Dabei wird mittels der Bewegung des mobilen Endgerätes dieses quasi als Zeiger nutzbar.

Eine weitere Ausgestaltung der Erfindung ist gekennzeichnet durch wenigstens ein Mittel zur zeitlichen Erfassung einer Änderung der räumlichen Bewegung des mobilen Endgerätes und/oder der relativen Lage des mobilen Endgerätes zum Untergrund, vorzugsweise wenigstens einen Zeitgeber und/oder Zähler umfassend.

Eine besonders vorteilhafte Ausgestaltung der Erfindung ist gekennzeichnet durch wenigstens ein Mittel zur Erfassung der Intensität der Umgebungsbeleuchtung des mobilen Endgerätes. Das zur Erfassung der Intensität der Umgebungsbeleuchtung des mobilen Endgerätes ist vorteilhafterweise ein lichtempfindliches Bauelement, vorzugsweise ein Lichtsensor. In einer weiteren besonders vorteilhaften Ausgestaltung der Erfindung weist das Mittel zur Erfassung der Intensität der Umgebungsbeleuchtung des mobilen Endgerätes einen einem bestimmten Intensitätspegel zugeordneten und/oder zuordbaren Schwellenwert auf, bei und/oder mit dessen erreichen das Mittel zur Erfassung der räumlichen Bewegung des mobilen Endgerätes und/oder das Mittel zur Erfassung der relativen Lage des mobilen Endgerätes zum Untergrund deaktiviert wird. In einer weiteren vorteilhaften Ausgestaltung der Erfindung weist das Mittel zur Erfassung der Intensität der Umgebungsbeleuchtung des mobilen Endgerätes einen einem bestimmten Intensitätspegel zugeordneten und/oder zuordbaren weiteren Schwellenwert auf, bei und/oder mit dessen erreichen das deaktivierte Mittel zur Erfassung der räumlichen Bewegung des mobilen Endgerätes und/oder das deaktivierte Mittel zur Erfassung der relativen Lage des mobilen Endgerätes zum Untergrund wieder aktiviert wird. Durch diese Maßnahmen - einzeln und/oder in Kombination miteinander - kann seitens des erfindungsgemäßen mobilen Endgerätes festgestellt werden, ob sich dieses in einem abge- bzw. verdunkelten Raum, beispielsweise im Kino oder in einer Tasche einer Jacke, oder dergleichen befindet oder nicht. Weiter kann dementsprechend in Abhängigkeit von der Intensität der Umgebungsbeleuchtung des mobilen Endgerätes mit der Zuordnung des Signals zu der Information in Abhängigkeit von wenigstens einer räumlichen Bewegung des mobilen Endgerätes und/oder mit der Zuordnung des Signals zu der Information in Abhängigkeit von der relativen Lage des mobilen Endgerätes zum Untergrund in kombinativer Art und Weise erfolgen. So kann insbesondere über das Mittel zur Erfassung der räumlichen Bewegung des mobilen Endgerätes und/oder das Mittel zur Erfassung der relativen Lage des mobilen Endgerätes zum Untergrund bei unterschreiten einer bestimmten Intensität der Umgebungsbeleuchtung des mobilen Endgerätes, beispielsweise wenn sich das mobile Endgerät in einer Tasche befindet, die entsprechende durch das Mittel zur Erfassung der räumlichen Bewegung des mobilen Endgerätes und/oder das Mittel zur Erfassung der relativen Lage des mobilen Endgerätes zum Untergrund gegebene Signalzuordnung aufgehoben bzw. deaktiviert werden, während diese Signalzuordnung bei Vorhandensein einer bestimmten Intensität der Umgebungsbeleuchtung des mobilen Endgerätes, beispielsweise wenn das mobile Endgerät auf einem Tisch angeordnet ist, entsprechend erhalten bzw. aktiviert bleibt.

Eine konkrete Ausgestaltung der Erfindung ist gekennzeichnet durch eingehende Anrufe und/oder eingehende Mitteilungen eines Nachrichtendienstes eines Telekommunikationsnetzes, vorzugsweise eines Mobilfunknetzes, als Kommunikationsinformation.

Eine weitere Ausgestaltung der Erfindung ist gekennzeichnet durch wenigstens ein Blinklicht, vorzugsweise ein mehrfarbiges Blinklicht, als ein eine Information repräsentierendes Signal. Eine besonders bevorzugte Ausgestaltung der Erfindung ist gekennzeichnet durch eine akustische und/oder optische Deaktivierung als ein eine Information repräsentierendes Signal.

Gemäß einer weiteren vorteilhaften Ausgestaltung der Erfindung ist die relative Lage des mobilen Endgerätes zum Untergrund mechanisch einstellbar und/oder vorgebbar, vorzugsweise mittels eines im mobilen Endgerät verlagerbaren Gewichtes, welches beispielsweise durch eine metallische Kugel bereitgestellt sein kann, so dass das mobile Endgerät aufgrund des Gewichtes einen vorgebbaren Schwerpunkt nach Art eines sogenannten "Steh-auf-Männchens" einnimmt.

Ein weiterer vorteilhafter Vorschlag der Erfindung ist gekennzeichnet durch wenigstens ein mit dem mobilen Endgerät verbindbares Identifikationselement zur Steigerung der Merkbarkeit der räumlichen Bewegung des mobilen Endgerätes und/oder der relativen Lage des mobilen Endgerätes zum Untergrund. Das erfindungsgemäße Identifikationselement ist in einer bevorzugten Ausgestaltung der Erfindung ein Aufkleber.

In einer besonders bevorzugten Ausgestaltung der Erfindung ist das mobile Endgerät ein in einem Mobilfunknetz betreibbares Mobilfunktelefon.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: ein erstes Ausführungsbeispiel für eine erfindungsgemäße Signalzuordnung in Abhängigkeit von der Lage des mobilen Endgerätes zum Untergrund;
- Fig. 2: ein zweites Ausführungsbeispiel für eine erfindungsgemäße Signalzuordnung in Abhängigkeit von der Lage des mobilen Endgerätes zum Untergrund;
- Fig. 3: ein drittes Ausführungsbeispiel für eine erfindungsgemäße Signalzuordnung in Abhängigkeit von der Lage des mobilen Endgerätes zum Untergrund;
- Fig. 4: ein viertes Ausführungsbeispiel für eine erfindungsgemäße Signalzuordnung in Abhängigkeit von der Lage des mobilen Endgerätes zum Untergrund und
- Fig. 5: ein Ausführungsbeispiel für eine erfindungsgemäße Signalzuordnung in Abhängigkeit von einer räumlichen Bewegung des mobilen Endgerätes.

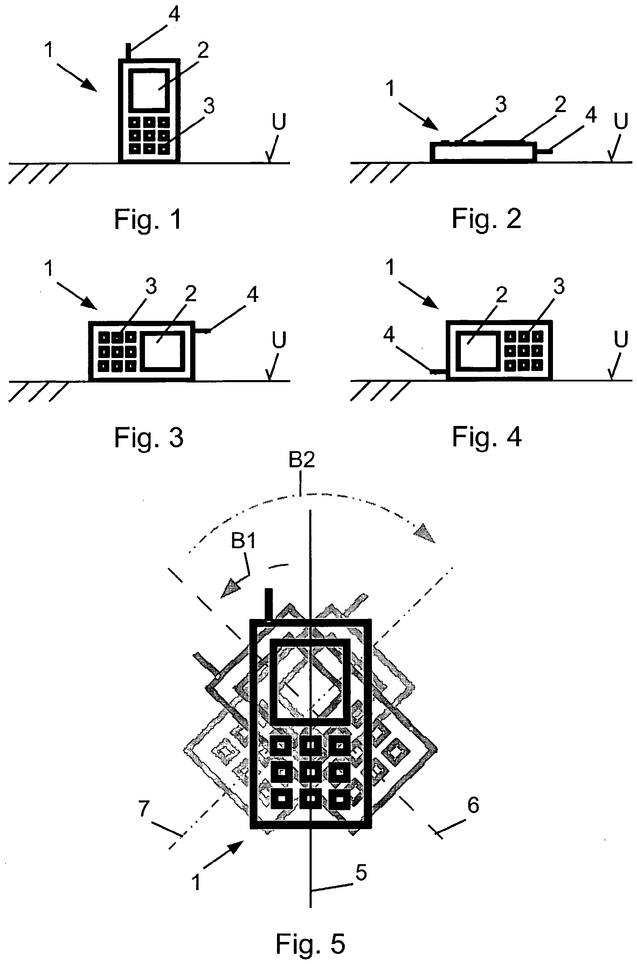

Die Figuren 1 bis 5 zeigen jeweils ein in einem Mobilfunknetz betreibbares mobiles Endgerät 1, vorliegend ein Mobilfunktelefon 1 mit einem Display 2 als Anzeigeeinrichtung und einer unterhalb des Displays 2 angeordneten Tastatur 3 als Eingabeeinrichtung. Unter Nutzung der aus dem Gehäuse des Mobilfunktelefons 1 herausragenden bzw. herausstehenden Antenne 4 kann das Mobilfunktelefon 1 in an und für sich bekannter Art und Weise in Kommunikationsverbindung mit einem bzw. in ein Mobilfunknetz treten. Das Mobilfunktelefon 1 weist weiter einen hier nicht dargestellten Lautsprecher und ein Mikrofon auf. Der Lautsprecher des Mobilfunktelefons 1 dient als Mittel zur akustischen Wiedergabe von Informationen, insbesondere Kommunikationsinformationen wie beispielsweise eingehende Anrufe und/oder Mitteilungen eines Nachrichtendienstes des Mobilfunknetzes. Das Display 2 des Mobilfunktelefons 1 dient als Mittel zur optischen Wiedergabe von Informationen, insbesondere Kommunikationsinformationen wie beispielsweise verpasste bzw. versäumte Anrufe und/oder Mitteilungen eines Nachrichtendienstes des Mobilfunknetzes. Aus Gründen der Übersichtlichkeit sind in Fig. 5 die Bezugszeichen für das Display und die Tastatur des Mobilfunktelefons 1 nicht eingezeichnet.

Das in den Figuren 1 bis 4 dargestellte Mobilfunktelefon 1 weist ein Mittel zur Erfassung der relativen Lage des Mobilfunktelefons 1 zum Untergrund U, beispielsweise einem Tisch, dem Boden einer Tasche oder dergleichen Untergrund auf. In Abhängigkeit von der relativen Lage des Mobilfunktelefons 1 zum Untergrund U werden dabei den seitens des Mobilfunktelefons wiedergebbaren akustischen und/oder optischen Informationen unterschiedliche die Informationen repräsentierende Signale mit unterschiedlich einstellbaren Signalparametern zugeordnet.

Bei dem in Fig. 1 dargestellten Ausführungsbeispiel, bei dem das Mobilfunktelefon 1 weitestgehend senkrecht aufgerichtet auf dem Untergrund U steht, werden vorliegend eingehende Anrufe und/oder Mitteilungen eines Nachrichtendienstes des Mobilfunknetzes ausschließlich in optischer Form seitens des Displays 2 wiedergegeben. Der Lautsprecher des Mobilfunktelefons 1 ist dabei deaktiviert.

Bei dem in Fig. 2 dargestellten Ausführungsbeispiel, bei dem das Mobilfunktelefon 1 flach auf dem Untergrund U liegt, werden vorliegend sowohl der Lautsprecher als auch das Display 2 des Mobilfunktelefons 1 deaktiviert, so dass in diesem Zustand keinerlei Informationen seitens des Mobilfunktelefons 1 wiedergegeben werden.

Bei dem in Fig. 3 dargestellten Ausführungsbeispiel, bei dem das Mobilfunktelefon 1 weitestgehend waagerecht aufgerichtet mit der Antenne 4 sich oben befindend auf dem Untergrund U liegt, werden vorliegend ausschließlich eingehende Anrufe und/oder Mitteilungen eines Nachrichtendienstes des Mobilfunknetzes einer bestimmten Person oder bestimmter Personen durch akustische und/oder optische Signale seitens des Lautsprechers bzw. des Displays 2 des Mobilfunktelefons 1 wiedergegeben.

Bei dem in Fig. 4 dargestellten Ausführungsbeispiel, bei dem das Mobilfunktelefon 1 weitestgehend waagerecht aufgerichtet mit der Antenne 4 sich unten befindend auf dem Untergrund U liegt, werden vorliegend eingehende Anrufe und/oder Mitteilungen eines Nachrichtendienstes des Mobilfunknetzes einer bestimmten Person oder bestimmter Personen durch optische durch ein mehrfarbiges Blinklicht seitens des Displays 2 des Mobilfunktelefons 1 wiedergegeben.

Das in Figur 5 dargestellte Mobilfunktelefon 1 weist ein Mittel zur Erfassung der räumlichen Bewegung des Mobilfunktelefons 1 auf. In Abhängigkeit von der räumlichen Bewegung des Mobilfunktelefons 1 werden dabei den seitens des Mobilfunktelefons wiedergebbaren akustischen und/oder optischen Informationen unterschiedliche die Informationen repräsentierende Signale mit unterschiedlich einstellbaren Signalparametern zugeordnet.

Vorliegend erfolgt die Signalzuordnung in Abhängigkeit von Änderungen der räumlichen Bewegung des Mobilfunktelefons 1 durch aufeinanderfolgendes Einnehmen von zwei räumlichen Bewegungen des Mobilfunktelefons 1 innerhalb einer vorbestimmten Zeitspanne. Dabei wird das Mobilfunktelefon 1 zunächst von einer in Fig. 5 mit dem Bezugszeichen 5 gekennzeichneten Ausgangslage durch eine räumliche Bewegung, vorliegend ein Drehen bzw. Verschwenken des Mobilfunktelefons 1 entgegen dem Uhrzeigersinn entsprechend dem in Fig. 5 mit dem Bezugszeichen B1 gekennzeichneten Pfeil in eine in Fig. 5 mit dem Bezugszeichen 6 gekennzeichneten erste Bewegungslage verbracht. Die Bewegung B1 hat dabei innerhalb einer vorbestimmbaren Zeit und damit mit einer vorbestimmbaren Geschwindigkeit zu erfolgen. Anschließend ist das Mobilfunktelefon 1 von der ersten Bewegungslage 6 innerhalb einer vorbestimmbaren Zeit und damit mit einer vorbestimmbaren Geschwindigkeit durch eine weitere räumliche Bewegung, vorliegend ein Drehen bzw. Verschwenken des Mobilfunktelefons 1 mit dem Uhrzeigersinn entsprechend dem in Fig. 5 mit dem Bezugszeichen B2 gekennzeichneten Pfeil in eine in Fig. 5 mit dem Bezugszeichen 7 gekennzeichnete zweite Bewegungslage zu verbringen, um die Signalzuordnung, vorliegend beispielsweise ein deaktivieren des Lautsprechers des Mobilfunktelefons 1 für eingehende Anrufe und/oder Mitteilungen eines Nachrichtendienstes des Mobilfunknetzes, einzustellen. Diese Signalzuordnung ist vorliegend beispielsweise durch erneutes Ausführen der räumlichen Bewegungen B1 und B2 wieder deaktivierbar und damit der vorherige Signalzuordnungszustand einnehmbar.

Die in den Figuren dargestellten Ausführungsbeispiele der Erfindung dienen lediglich der Erläuterung der Erfindung und sind für diese nicht beschränkend.

### Bezugszeichenliste

- 1: mobiles Endgerät/Mobilfunktelefon
- 2: Anzeigeeinrichtung/Display
- 3: Eingabeeinrichtung/Tastatur
- 4: Antenne
- 5: Ausgangslage
- 6: erste Bewegungslage
- 7: zweite Bewegungslage
- B1: erste Bewegung
- B2: zweite Bewegung
- U: Untergrund

## Patentansprüche

1. Mobiles Endgerät (1) zur Nutzung in Telekommunikationsnetzen, insbesondere Mobilfunknetzen,
mit wenigstens einem Mittel (2) zur zumindest optischen und/oder akustischen Wiedergabe von Kommunikationsinformationen repräsentierenden Signalen,
wobei wenigstens einer Kommunikationsinformation wenigstens ein die Kommunikationsinformation repräsentierendes Signal mit festen und/oder einstellbaren Signalparametern zuordbar ist,
mit wenigstens einem Mittel zur Erfassung der räumlichen Bewegung (B1, B2) des mobilen Endgerätes (1),
**dadurch gekennzeichnet, dass**
dieses ferner wenigstens ein Mittel zur Erfassung der relativen Lage des mobilen Endgerätes (1) zum Untergrund (U) aufweist,
wobei die Zuordnung des Signals zu der Kommunikationsinformation in Abhängigkeit von der relativen Lage des mobilen Endgerätes (1) zum Untergrund (U) und in Abhängigkeit von der räumlichen Bewegung (B1, B2) des mobilen Endgerätes (1) erfolgt,
wobei die Signalzuordnung in Abhängigkeit von wenigstens einer vorbestimmbaren Änderung in Form von eines aufeinanderfolgenden Einnehmens von wenigstens zwei räumlichen Bewegungen (B1, B2) des mobilen Endgerätes (1) und/oder von wenigstens zwei relativen Lagen des mobilen Endgerätes (1) zum Untergrund (U) erfolgt.

2. Mobiles Endgerät (1) nach Anspruch 1, **dadurch gekennzeichnet, dass** die räumliche Bewegung (B1, B2) einstellbar ist.

3. Mobiles Endgerät (1) nach Anspruch 1 oder Anspruch 2, **dadurch gekennzeichnet, dass** die räumliche Bewegung (B1, B2) individuell vorgebbar ist.

4. Mobiles Endgerät (1) nach einem der Ansprüche 1 bis 3, **dadurch gekennzeichnet, dass** das aufeinanderfolgende Einnehmen zeitlichen Vorgaben unterliegt, die vorzugsweise einstellbar und/oder individuell vorgebbar sind.

5. Mobiles Endgerät (1) nach einem der Ansprüche 1 bis 4, **gekennzeichnet durch** ein wenigstens einmal erfolgendes Verschwenken des mobilen Endgerätes (1) um wenigstens eine Koordinatenachse (5) des mobilen Endgerätes als räumliche Bewegung (B1, B2).

6. Mobiles Endgerät (1) nach einem der Ansprüche 1 bis 5, **gekennzeichnet durch** ein Hin- und Herschwenken des mobilen Endgerätes (1), vorzugsweise nach Art eines Schüttelns des mobilen Endgerätes (1), als räumliche Bewegung (B1, B2).

7. Mobiles Endgerät (1) nach einem der Ansprüche 1 bis 6, **dadurch gekennzeichnet, dass** die Signalzuordnung durch Erkennung unbeabsichtigt ausgeführter räumlicher Bewegungen des mobilen Endgerätes (1) und/oder eingenommener relative Lagen des mobilen Endgerätes (1) zum Untergrund (U) rückgängigmachbar ist, wobei der Zustand der vorherigen Signalzuordnung oder ein anderer vorgebbarer Signalzuordnungszustand eingenommen wird.

8. Mobiles Endgerät (1) nach einem der Ansprüche 1 bis 7, **dadurch gekennzeichnet, dass** mit der Signalzuordnung eine Einstellung von Signalparametern des Signals erfolgt.

9. Mobiles Endgerät (1) nach einem der Ansprüche 1 bis 8, **gekennzeichnet durch** wenigstens ein Mittel zur Erfassung einer Änderung der räumlichen Bewegung (B1, B2) des mobilen Endgerätes (1) und/oder der relativen Lage des mobilen Endgerätes (1) zum Untergrund (U).

10. Mobiles Endgerät (1) nach einem der Ansprüche 1 bis 9, **dadurch gekennzeichnet, dass** das Mittel zur Erfassung der räumlichen Bewegung (B1, B2) des mobilen Endgerätes (1) und/oder das Mittel zur Erfassung der relativen Lage des mobilen Endgerätes (1) zum Untergrund (U) und/oder das Mittel zur Erfassung einer Änderung der räumlichen Bewegung (B1, B2) des mobilen Endgerätes (1) und/oder der relativen Lage des mobilen Endgerätes (1) zum Untergrund (U) wenigstens ein Sensorikelement umfasst.

11. Mobiles Endgerät (1) nach einem der Ansprüche 1 bis 10, **gekennzeichnet durch** wenigstens ein Mittel zur zeitlichen Erfassung einer Änderung der räumlichen Bewegung (B1, B2) des mobilen Endgerätes (1) und/oder der relativen Lage des mobilen Endgerätes (1) zum Untergrund (U).

12. Mobiles Endgerät (1) nach einem der Ansprüche 1 bis 11, **gekennzeichnet durch** wenigstens ein Mittel zur Erfassung der Intensität der Umgebungsbeleuchtung des mobilen Endgerätes (1).

13. Mobiles Endgerät (1) nach Anspruch 12, **dadurch gekennzeichnet, dass** das Mittel zur Erfassung der Intensität der Umgebungsbeleuchtung des mobilen Endgerätes (1) ein lichtempfindliches Bauelement, vorzugsweise ein Lichtsensor, ist.

14. Mobiles Endgerät (1) nach Anspruch 12 oder Anspruch 13, **dadurch gekennzeichnet, dass** das Mittel zur Erfassung der Intensität der Umgebungsbeleuchtung des mobilen Endgerätes (1) einen einem bestimmten Intensitätspegel zugeordneten und/oder zuordbaren Schwellenwert aufweist, bei und/oder mit dessen erreichen das Mittel zur Erfassung der räumlichen Bewegung (B1, B2) des mobilen Endgerätes (1) und/oder das Mittel zur Erfassung der relativen Lage des mobilen Endgerätes (1) zum Untergrund (U) deaktivierbar ist.

15. Mobiles Endgerät (1) nach Anspruch 14, **dadurch gekennzeichnet , dass** das Mittel zur Erfassung der Intensität der Umgebungsbeleuchtung des mobilen Endgerätes (1) einen einem bestimmten Intensitätspegel zugeordneten und/oder zuordbaren weiteren Schwellenwert aufweist, bei und/oder mit dessen erreichen das deaktivierte Mittel zur Erfassung der räumlichen Bewegung (B1, B2) des mobilen Endgerätes (1) und/oder das deaktivierte Mittel zur Erfassung der relativen Lage des mobilen Endgerätes (1) zum Untergrund (U) wieder aktivierbar ist.

16. Mobiles Endgerät (1) nach einem der Ansprüche 2 bis 15, **gekennzeichnet durch** eingehende Anrufe und/oder eingehende Mitteilungen eines Nachrichtendienstes eines Telekommunikationsnetzes, vorzugsweise eines Mobilfunknetzes, als Kommunikationsinformation.

17. Mobiles Endgerät (1) nach einem der Ansprüche 1 bis 16, **gekennzeichnet durch** wenigstens ein Blinklicht, vorzugsweise ein mehrfarbiges Blinklicht, als ein eine Information repräsentierendes Signal.

18. Mobiles Endgerät (1) nach einem der Ansprüche 1 bis 17, **gekennzeichnet durch** eine akustische und/oder optische Deaktivierung als ein eine Information repräsentierendes Signal.

19. Mobiles Endgerät (1) nach einem der Ansprüche 1 bis 18, **dadurch gekennzeichnet, dass** die relative Lage des mobilen Endgerätes (1) zum Untergrund (U) mechanisch einstellbar und/oder vorgebbar ist.

20. Mobiles Endgerät (1) nach einem der Ansprüche 1 bis 19, **gekennzeichnet durch** wenigstens ein mit dem mobilen Endgerät (1) verbindbares Identifikationselement zur Steigerung der Merkbarkeit der räumlichen Bewegung (B1, B2) des mobilen Endgerätes (1) und/oder der relativen Lage des mobilen Endgerätes (1) zum Untergrund (U).

21. Mobiles Endgerät (1) nach Anspruch 20, **dadurch gekennzeichnet, dass** das Identifikationselement ein Aufkleber ist.

22. Mobiles Endgerät (1) nach einem der Ansprüche 1 bis 21, **dadurch gekennzeichnet, dass** dieses ein in einem Mobilfunknetz betreibbares Mobilfunktelefon (1) ist.

## Claims

1. A mobile terminal (1) for use in telecommunication networks, in particular mobile radio networks,
comprising at least one means (2) for the at least optical and/or acoustic reproduction of signals representing communication information,
wherein at least to one communication information item at least one signal representing the communication information can be assigned to the communication information item with fixed and/or settable signal parameters,
comprising at least one means for detecting the spatial movement (B1, B2) of the mobile terminal (1),
**characterized in that**
this one further comprises at least one means for detecting the relative position of the mobile terminal (1) with respect to the underground (U),
wherein the signal is assigned to the communication information item in dependence on the relative position of the mobile terminal (1) with respect to the underground (U) and in dependence on the spatial movement (B1, B2) of the mobile terminal (1),
wherein the assignment of the signal is realized in dependence on at least one pre-determinable change in form of consecutive performances of at least two spatial movements (B1, B2) of the mobile terminal (1) and/or the adoption of at least two relative positions of the mobile terminal (1) with respect to the underground (U).

2. A mobile terminal (1) according to claim 1, **characterized in that** the spatial movement (B1, B2) can be adjusted.

3. A mobile terminal (1) according to claim 1 or claim 2, **characterized in that** the spatial movement (B1, B2) can be individually pre-determined.

4. A mobile terminal (1) according to one of the claims 1 to 3, **characterized in that** the consecutive adoption is subject to temporal provisions which can preferably be set and/or individually pre-defined.

5. A mobile terminal (1) according to one of the claims 1 to 4, **characterized by** a pivoting of the mobile terminal (1) around at least one coordinate axis (5) of the mobile terminal as spatial movement (B1, B2) which pivoting takes place at least once.

6. A mobile terminal (1) according to one of the claims 1 to 5, **characterized by** moving the mobile terminal (1) back and forth, preferably in the form of shaking the mobile terminal (1), as spatial movement (B1, B2).

7. A mobile terminal (1) according to one of the claims 1 to 6, **characterized in that** the signal assignment can be undone, if it is detected that spatial movements of the mobile terminal (1) have been performed unintentionally and/or relative positions of the mobile terminal (1) with respect to the underground (U) have been adopted unintentionally, wherein the condition of the previous signal assignment or another pre-determinable signal assignment condition will be adopted.

8. A mobile terminal (1) according to one of the claims 1 to 7, **characterized in that** the signal parameters of the signal will be set together with the signal assignment.

9. A mobile terminal (1) according to one of the claims 1 to 8, **characterized by** at least one means for detecting a change in the spatial movement (B1, B2) of the mobile terminal (1) and/or the relative position of the mobile terminal (1) with respect to the underground (U).

10. A mobile terminal (1) according to one of the claims 1 to 9, **characterized in that** the means for detecting the spatial movement (B1, B2) of the mobile terminal (1) and/or the means for detecting the relative position of the mobile terminal (1) with respect to the underground (U) and/or the means for detecting a change in the spatial movement (B1, B2) of the mobile terminal (1) and/or the relative position of the mobile terminal (1) with respect to the underground (U) comprises at least one sensor element.

11. A mobile terminal (1) according to one of the claims 1 to 10, **characterized by** at least one means for the temporal detection of a change in the spatial movement (B1, B2) of the mobile terminal (1) and/or the relative position of the mobile terminal (1) with respect to the underground (U).

12. A mobile terminal (1) according to one of the claims 1 to 11, **characterized by** at least one means for detecting the intensity of the ambient light of the mobile terminal (1).

13. A mobile terminal (1) according to claim 12, **characterized in that** the means for detecting the intensity of the ambient light of the mobile terminal (1) is a light-sensitive component, preferably a light sensor.

14. A mobile terminal (1) according to claim 12 or claim 13, **characterized in** hat the means for detecting the intensity of the ambient light of the mobile terminal (1) comprises a threshold value that is assigned or can be assigned to a certain intensity level, at which and/or with reaching this one the means for detecting the spatial movement (B1, B2) of the mobile terminal (1) and/or the means for detecting the relative position of the mobile terminal (1) with respect to the underground (U) can be deactivated.

15. A mobile terminal (1) according to claim 14, **characterized in that** the means for detecting the intensity of the ambient light of the mobile terminal (1) comprises another threshold value that is assigned or can be assigned to a certain intensity level, at which and/or with reaching this one the deactivated means for detecting the spatial movement (B1, B2) of the mobile terminal (1) and/or the deactivated means for detecting the relative position of the mobile terminal (1) with respect to the underground (U) can be again activated.

16. A mobile terminal (1) according to one of the claims 2 to 15, **characterized by** incoming calls and/or incoming messages of a message service of a telecommunication network, preferably a mobile radio network, as communication information.

17. A mobile terminal (1) according to one of the claims 1 to 16, **characterized by** at least one flashing light, preferably a multicoloured flashing light, as a signal representing an information item.

18. A mobile terminal (1) according to one of the claims 1 to 17, **characterized by** an acoustic and/or optical deactivation as a signal representing an information item.

19. A mobile terminal (1) according to one of the claims 1 to 18, **characterized in that** the relative position of the mobile terminal (1) with respect to the underground (U) can be mechanically adjusted and/or pre-determined.

20. A mobile terminal (1) according to one of the claims 1 to 19, **characterized by** at least one identification element that can be connected to the mobile terminal (1) for increasing the memorability of the spatial movement (B1, B2) of the mobile terminal (1) and /or the relative position of the mobile terminal (1) with respect to the underground (U).

21. A mobile terminal (1) according to claim 20, **characterized in that** the identification element is a sticker.

22. A mobile terminal (1) according to one of the claims 1 to 21, **characterized in that** this one is a mobile telephone (1) that can be operated in a mobile radio network.

## Revendications

1. Terminal mobile (1) destiné à l'utilisation dans des réseaux de télécommunication, notamment des réseaux radio mobile,
comprenant un moyen (2) pour la reproduction au moins optique et/ou acoustique des signaux représentant des informations de communication,
au moins un information de communication au moins un signal représentant l'information de communication pouvant être attribué à au moins à l'information de communication ayant des paramètres de signal fixes et/ou réglables,
comprenant au moins un moyen de détection du mouvement spatial (B1, B2) du terminal mobile (1),
**caractérisé en ce que**
celui-ci comprend en outre su moins un moyen de détection de la position relative du terminal mobile (1) par rapport au sol (U),
dans lequel le signal est attribué à l'information de communication en fonction de la position relative du terminal mobile (1) par rapport au sol (U) et en fonction du mouvement spatial (B1, B2) du terminal mobile (1),
dans lequel l'attribution du signal se fait en fonction d'au moins un changement pré-déterminable en formé des exécutions successives d'au moins deux mouvements spatiaux (B1, B2) du terminal mobile (1) et/ou en forme des prises successives d'au moins deux positions relatives du terminal mobile (1) par rapport au sol (U).

2. Terminal mobile (1) selon la revendication 1, **caractérisé en ce que** le mouvement spatial (B1, B2) est réglable.

3. Terminal mobile (1) selon la revendication 1 ou la revendication 2, **caractérisé en ce que** le mouvement spatial (B1, B2) peut être prédéterminé individuellement.

4. Terminal mobile (1) selon l'une des revendications 1 à 3, **caractérisé en ce que** les exécutions/prises successives sont soumises à des prescriptions temporelles qu'on peut de préférence fixer et/ou individuellement prédéfinir.

5. Terminal mobile (1) selon l'une des revendications 1 à 4, **caractérisé par** un pivotement du terminal mobile (19 autour d'au moins un axe des coordonnées (5) du terminal mobile comme mouvement spatial (B1, B2), lequel pivotement est effectué au moins une fois.

6. Terminal mobile (1) selon l'une des revendications 1 à 5, **caractérisé par** un mouvement de va-et-vient du terminal mobile (1), de préférence à la façon d'une secousse du terminal mobile (1), comme mouvement spatial (B1, B2).

7. Terminal mobile (1) selon l'une des revendications 1 à 6, **caractérisé en ce que** l'attribution du signal peut être annulée, s'il est détecté que des mouvements spatiaux du terminal mobile (1) ont été effectués de manière non intentionnelle et/ou des position relatives du terminal mobile (1) par rapport au sol (U) ont été prises de manière non intentionnelle, dans lequel l'état de l'attribution du signal précédente ou un autre état d'attribution de signal pré-déterminable sera adopté.

8. Terminal mobile (1) selon l'une des revendications 1 à 7, **caractérisé en ce que** les paramètres de signal du signal sont réglés ensemble avec l'attribution de signal.

9. Terminal mobile (1) selon l'une des revendications 1 à 8, **caractérisé par** au moins un moyen destiné à détecter un changement du mouvement spatial (B1, B2) du terminal mobile (1) et/ou de la position relative du terminal mobile (1) par rapport au sol (U).

10. Terminal mobile (1) selon l'une des revendications 1 à 9, **caractérisé en ce que** le moyen destiné à détecter le mouvement spatial (B1, B2) du terminal mobile (1) et/ou le moyen destiné à détecter la position relative du terminal mobile (1) par rapport au sol (U) et/ou le moyen destiné à détecter un changement du mouvement spatial (B1, B2) du terminal mobile (1) et/ou de la position relative du terminal mobile (1) par rapport au sol (U) comprend au moins un élément de capteur.

11. Terminal mobile (1) selon l'une des revendications 1 à 10, **caractérisé par** au moins un moyen destiné à détecter de manière temporelle un changement du mouvement spatial (B1, B2) du terminal mobile (1) et/ou de la position relative du terminal mobile (1) par rapport au sol (U).

12. Terminal mobile (1) selon l'une des revendications 1 à 11, **caractérisé par** au moins un moyen destiné à détecter l'intensité de l'éclairage ambient du terminal mobile (1).

13. Terminal mobile (1) selon la revendication 12, **caractérisé en ce que** le moyen destiné à détecter l'intensité de l'éclairage ambient du terminal mobile (1) est un composant photosensible, de préférence un capteur de lumière.

14. Terminal mobile (1) selon la revendication 12 ou la revendication 13, **caractérisé en ce que** le moyen destiné à détecter l'intensité de l'éclairage ambient du terminal mobile (1) comprend une valeur de seuil, qui est attribuée ou qui peut être attribuée à un certain niveau d'intensité, auquel et/ou avec l'atteinte de celui-ci le moyen destiné à détecter le mouvement spatial (B1, B2) du terminal mobile (1) et/ou le moyen destiné à détecter la position relative du terminal mobile (1) par rapport au sol (U) peut être désactivé.

15. Terminal mobile (1) selon la revendication 14, **caractérisé en ce que** le moyen destiné à détecter l'intensité de l'éclairage ambient du terminal mobile (1) comprend une autre valeur de seuil, qui est attribuée ou qui peut être attribuée à un certain niveau d'intensité, auquel et/ou avec l'atteinte de celui-ci le moyen désactivé destiné à détecter le mouvement spatial (B1, B2) du terminal mobile (1) et/ou le moyen désactivé destiné à détecter la position relative du terminal mobile (1) par rapport au sol (U) peut être réactivé.

16. Terminal mobile (1) selon l'une des revendications 2 à 15, **caractérisé par** des appels entrants et/ou des messages entrants d'un service de messages d'un réseau de télécommunications, de préférence d'un réseau radio mobile, comme informations de communication.

17. Terminal mobile (1) selon l'une des revendications 1 à 16, **caractérisé par** au moins une lumière clignotante, de préférence une lumière clignotante multicolore, comme un signal représentant une information.

18. Terminal mobile (1) selon l'une des revendications 1 à 17, **caractérisé par** une désactivation acoustique et/ou optique comme un signal représentant une information.

19. Terminal mobile (1) selon l'une des revendications 1 à 18, **caractérisé en ce que** la position relative du terminal mobile (1) par rapport au sol (U) peut être réglée et/ou prédéterminée mécaniquement.

20. Terminal mobile (1) selon l'une des revendications 1 à 19, **caractérisé par** au moins un élément d'identification, qui peut être relié au terminal mobile (1) pour augmenter la mémorabilité du mouvement spatial (B1, B2) du terminal mobile (1) et/ou de la position relative du terminal mobile (1) par rapport au sol (U).

21. Terminal mobile (1) selon la revendication 20, **caractérisé en ce que** l'élément d'identification est un autocollant.

22. Terminal mobile (1) selon l'une des revendications 1 à 21, **caractérisé en ce que** celui-ci est un téléphone mobile (1) fonctionnant dans un réseau radio mobile.
